Europäisches Patentamt

European Patent Office

Office européen des brevets

(11) Numéro de publication: **0 065 471**
A2

# (12) DEMANDE DE BREVET EUROPEEN

(21) Numéro de dépôt: 82420060.4

(22) Date de dépôt: 07.05.82

(51) Int. Cl.³: **D 06 M 16/00, C 11 D 3/48**

(30) Priorité: 08.05.81 FR 8109376

(43) Date de publication de la demande: 24.11.82
Bulletin 82/47

(84) Etats contractants désignés: **AT BE CH DE GB IT LI LU NL**

(71) Demandeur: "**LABORATOIRES ALFRED REISACHER & FILS**" Société Anonyme, 170 Avenue Thiers, F-69006 Lyon (FR)

(72) Inventeur: **Fischer, Henri Louis, 19 Rue Montgolfier, F-69006 Lyon (FR)**

(74) Mandataire: **Monnier, Guy et al, Cabinet Monnier 142-150 Cours Lafayette, F-69003 Lyon (FR)**

(54) Procédé et solution pour éviter des odeurs de transpiration des pieds.

(57) Pour éviter les mauvaises odeurs de transpiration des pieds, on rince les bas ou chaussettes après lavage à l'aide d'une solution renfermant un agent propre à empêcher la décomposition de la sueur, source des odeurs en question. La solution renferme préférablement du chlorure d'alkyldiméthyl-bensyl-ammonium, de l'alkyloamide d'acides gras naturels et un synergisant tel que l'acide glutarique, outre certains adjuvants tels qu'un détergent, un parfum, un désinfectant auxiliaire. Une fois les tissus imprégnés de la solution, l'effet est durable.

EP 0 065 471 A2

Procédé et solution pour éviter les odeurs de transpiration des pieds

On connait les inconvénients que constituent pour certaines personnes les odeurs de transpiration et plus particulièrement celles des pieds. On a imaginé divers produits qui permettent plus ou moins de les réduire, mais leur utilisation est souvent malcommode et parfois nuisible à l'organisme. Dans les cas les plus favorables ils n'ont qu'un effet momentané et il faut donc en multiplier l'application, ce qui constitue une servitude gênante.

L'invention vise à éviter les inconvénients ci-dessus en incorporant aux bas ou chaussettes un produit propre à lutter en permanence contre la décomposition de la sueur, source des mauvaises odeurs, en assurant ainsi une protection ininterrompue sans danger pour l'utilisateur.

Conformément à l'invention l'on rince les bas ou chaussettes après leur lavage par une solution comprenant essentiellement :

1° du chlorure d'alkyl-diméthyl-benzyl-ammonium,
2° de l'alkyloamide d'acides gras naturels,
3° un synergisant tel que l'aldéhyde glutarique.

Après rinçage dans cette solution, puis séchage, les tissus retiennent dans leurs fibres une quantité suffisante des composants ci-dessus pour assurer l'action désirée. Le produit ainsi retenu comporte un effet bactéricide immédiat qui fait cesser de suite la décomposition de la sueur et par conséquent l'émanation de mauvaises odeurs dont cette décomposition est la source. Il est rigoureusement sans danger pour l'épiderme de l'utilisateur. Il s'accroche très bien aux fibres naturelles ou synthétiques, de sorte qu'il n'est pas besoin de prévoir une très forte concentration des composants utiles dans la solution de rinçage mise en oeuvre. Il agit également sur l'intérieur de la chaussure en neutralisant ainsi les résidus de sueur qui pourraient y avoir été retenus, ce qui est très important lorsqu'on l'utilise pour la prémière fois.

On peut ajouter à cette solution un détergent tel notamment que le pyrophosphate de sodium et de potassium, en vue d'éliminer les graisses qui pourraient gêner l'effet recherché. Il est également avantageux d'y incorporer un désodorisant, désinfectant et bactéricide supplémentaire, et plus particulièrement celui vendu par la firme Ciba-Gagy sous la marque de fabrique IRGASAN. Comme autres additifs susceptibles d'être envisagés l'on peut citer les anti-mousses et les parfums.

La composition préférée est la suivante, exprimée sous la forme de pourcentages en poids :

| | |
|---|---|
| - chlorure d'alkyl-diméthyl-benzyl-ammonium | 18 |
| - Alkyloamide d'acides gras naturels | 6 |
| - Aldéhyde glutarique | 4 |
| - Pyrophosphate de sodium et de potassium | 3 |
| - IRGASAN | 1,80 |
| - Nonylphénol à deux molécules d'oxyde d'éthylène | 3 |
| - Parfum | 1,20 |
| - Eau | 63 |

Pour utiliser la solution ainsi préparée, après lavage des bas ou chaussettes, suivi éventuellement d'un pré-rinçage sommaire à l'eau pure, on les immerge dans celle-ci en les y agitant de façon qu'ils s'en imprègnent bien. On procède ensuite au séchage, comme à l'ordinaire.

L'expérience a montré qu'en plus de son effet bénéfique sur les mauvaises odeurs par suppression totale de la décomposition de la sueur, la solution suivant l'invention avait l'avantage de donner à l'utilisateur une sensation de fraîcheur particulièrement agréable. En outre les chaussettes, bas et chaussures sont imprégnés du parfum.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tous autres équivalents. On comprend qu'on pourrait éventuellement remplacer certains des composants de la solution de rinçage suivant l'invention par d'autres comportant les mêmes effets, bien que les essais aient démontré que ceux énumérés plus haut sont largement à préférer.

Revendications de brevet

1. Procédé pour lutter contre les mauvaises odeurs résultant de la transpiration des pieds, caractérisé en ce qu'on rince les bas ou chaussettes après lavage par le moyen d'une solution aqueuse renfermant au moins un composé propre à empêcher la décomposition de la sueur.

2. Procédé suivant la revendication 1, caractérisé en ce que la solution renferme :
- du chlorure d'alkyl-diméthyl-benzyl-ammonium,
- de l'alkyloamide d'acides gras naturels,
- de l'aldéhyde glutarique.

3. Procédé suivant l'une quelconque des revendications 1 et 2, caractérisé en ce que la solution renferme en outre un détergent.

4. Procédé suivant la revendication 3, caractérisé en ce que le détergent est constitué par du pyrophosphate de sodium et de potassium.

5. Procédé suivant l'une quelconque des revendications 1 et 2, caractérisé en ce que la solution renferme le produit connu sous la marque de fabrique IRGASAN.

6. Procédé suvant l'une quelconque des revendications 1 et 2, caractérisé en ce que la solution renferme en outre un agent anti-mousse.

7. Procédé suivant l'une quelconque des revendications 1 et 2, caractérisé en ce que la solution renferme en outre un parfum.

8. Solution pour la mise en oeuvre du procédé suivant l'une quelconque des revendications 1 à 7, caractérisée en ce qu'elle est établie conformément à ces revendications.

9. Solution suivant la revendication 8, caractérisée en ce

0065471

qu'elle renferme les composants suivants dont les pourcentages sont exprimés en poids.

- Chlorure d'alkyl-diméthyl-bensyl-ammonium    18
- Alkyloamides d'acides gras naturels    6
- Aldéhyde glutarique    4
- Pyrophosphate de sodium ou de potassium    3
- IRGASAN    1,80
- Nonylphénol à deux molécules d'oxyde d'éthylène    3
- Parfum    1,20
- Eau    63